# EUROPEAN PATENT APPLICATION

(11) **EP 3 382 346 A1**
(43) Date of publication of application: **03.10.2018**
(21) Application number: 17020125.5
(22) Date of filing: 30.03.2017
(51) Int. Cl.: G01D 4/00

(54) **A READER FOR READING A UTILITY METER AND A METHOD OF READING A UTILITY METER**

(71) Applicant: NorthQ ApS, 2100 Kobenhavn Ø (DK)
(72) Inventor: Dan, Iacoboae, 2880 Bagsværd (DK)

(57) **Abstract**

The present invention provides an assembly (100) of a utility meter having a rotating disc having an edge and defining a disc plane, and a reader (120) for reading the utility meter (110), the reader (120) comprising an element (1202) provided alongside the edge (1104) and having a first surface (1204), a second surface (1206) and an edge portion (1208), a radiation emitter (1210) having an emitter housing (1212) and being positioned so as to emit radiation in the disc plane and toward the edge (1104) and a radiation detector (1214) having a detector housing (1216), being provided at the second surface (1206) and facing towards the edge (1104) in order to receive a portion of reflected radiation, from the edge (1104). Further, the emitter housing (1212) and the detector housing (1216) overlap when projected on to a plane perpendicular to the direction of the emitted radiation.

## Description

### TECHNICAL FIELD

Embodiments of the present invention relate to utility meters and more particularly, to a reader for reading a utility meter and a method of reading a utility meter, that are range independent.

### BACKGROUND ART

Utility Meters are generally used to indicate consumption of a commodity such as gas, water and electricity etc., in a facility or a household. Such meters are characterized by presence of a Ferraris disc. One rotation of the Ferraris disc is proportional to the consumption of a certain amount of the commodity being monitored. Therefore to monitor consumption of the commodity, it is desirable that the number of rotations of the Ferraris disc be monitored in real time. A reader may be seen in US20130213156.

However, the aforementioned solution has a disadvantage that the detection of rotation is difficult at large distances or at varying distances. It is desired to be able to use the same reader for meters with different distances from the housing to the disc edge.

Accordingly, there remains a need in the prior art to have an improved reader for reading a utility meter and a method of reading a utility meter which overcome the problems and shortcomings.

### SUMMARY OF THE INVENTION

A first aspect of the present invention relates to an assembly of a utility meter and a reader for reading the utility meter, the utility meter having a rotating disc having an edge, the edge having a marked portion the disc defining a disc plane, the reader comprising:
- an element having a first surface, a second surface and an edge portion, the first surface facing away from the edge, the second surface facing towards the edge, the edge portion extending from the first surface to the second surface;
- a radiation emitter having an emitter housing and being positioned so as to emit radiation in a direction along the edge portion, in the disc plane and towards the edge, wherein the radiation emitter is located in the disc plane, and
- a radiation detector having a detector housing, being provided at the second surface and facing towards the edge in order to receive a portion of reflected radiation, from the edge, the radiation detector being located in the disc plane,
wherein the emitter housing and the detector housing overlap when projected on to a plane perpendicular to the direction of the emitted radiation.

In the present context, a "utility meter" is an element configured to quantify a consumption or delivery of a utility, such as power, gas, water or the like. Utility meters are often provided in each house or apartment but are also used for larger numbers of houses/families or for companies and the like. Often, utility meters have a rotating element as well as a numerical readout. The rotating element often rotates a full rotation when a predetermined quantity of the utility has been consumed or delivered and the numerical readout describes a number of rotations performed by the rotatable element. The present invention relates to deriving information from the rotating element.

In the present context, the disc plane may be a plane perpendicular to the rotation axis of the disc. The disc plane may be parallel to one or both parallel outer (usually upper and lower) surfaces of the disc. The plane may be located at the upper surface, at the lower surface or in between the upper and the lower surfaces of the rotating disc. Preferably, the plane of the rotating disc is located equidistant from the upper and the lower surfaces.

The edge may be a boundary of the rotating disc, such as the portions thereof which is the farthest from the rotation axis. Often, the edge extends from the upper surface to the lower surface and forms an interface between the upper and the lower surfaces. The edge may or may not be perpendicular to the upper and the lower surfaces, or parallel to the rotation axis. Further, the edge may be flat or rounded when viewed in the disc plane.

The emitter housing refers to an outer periphery of the radiation emitter. Usually, the emitter will be provided inside a shell or housing.

The detector housing similarly refers to an outer periphery of the radiation detector. The detector usually will have a radiation sensitive portion provided inside a detector housing.

In the present context, the element often is a planar element defined between the first surface and the second surface. The first surface and the second surface may or may not be parallel surfaces. Further, the element may have an opening or hole defining therein the edge portion. Alternatively, the edge portion may be a portion of an outer periphery of the element. In a preferred embodiment, the element is a PCB having conductors connected to conductors of the radiation detector and the radiation emitter. Additional elements may be provided, such as controllers, communication equipment, power sources etc, which may also be connected to the conductors of the PCB. The element may have a portion extending in the disc plane. If an opening or hole is provided, this may be provided in the plane. If an outer periphery extends in the plane, a remainder of the element may be provided on one side of the disc plane, for example.

Locating the radiation emitter and radiation detector in the plane of the disc and such that the projections of their respective housings overlap makes it possible to position the emitter and detector closer than if they were provided side by side and thus delimited by their respective housings. Providing a small distance between the radiation emitted and the detector makes the angle between the emitted and detected radiation small. Then, the sensitive surface of the radiation detector may be parallel to the element without loosing a lot of signal. Also, the set-up becomes less sensitive to the distance from the detector to the disc edge.

When the housings overlap in the projection, the housings cannot be positioned side by side but must be provided at different distances from the disc. This is achieved by providing the detector on one side and the emitter on the other side of the element.

The radiation emitter preferably is a laser. The laser allows sufficient intensity to the emitted and reflected radiations to penetrate even partially transparent housings. Additionally, the laser facilitates focusing of a large intensity at large distances from the emitter. Naturally, other emitter types, such as LEDs, OLEDs or the like may also be used.

The reader preferably further comprises a battery configured to provide power to the reader. The use of battery makes the reader portable. All other elements of the reader may be powered by the battery.

The rotating disc preferably is provided in an at least partially transparent housing. In this context, the housing should be at least partly transparent to the wavelength(s) of the emitted radiation.

The reader may further comprise a microcontroller connected to or communicating with the radiation detector and the radiation emitter. The microcontroller can be used to implement a number of control algorithms for saving power and adding new functionalities. Also, the microcontroller may, from an output of the detector, detect the passing of the marked portion to give a read-out of a consumption of a utility metered by the utility meter.

The microcontroller may be formed of any type of processor, ASIC, controller, DSP, chip or the like. The control module may be a monolithic element or provided as a number of elements in communication with each other. Naturally, the control module may have a power supply and inputs/outputs for the radiation emitter, the radiation detector, a display, user interface or the like, if desired. Also communication elements may be provided for receiving instructions for the control module or for outputting e.g. the information derived, such as a frequency of markers passing, a number of markers passing or points in time of passings of the marked portion.

The microcontroller may further be configured to control the radiation emitter. This controlling may be an adapting of an intensity of the emitted radiation. Also or alternatively, a pulse frequency and/or pulse width may be adapted. Adapting such feature(s) allows saving of power, making the invention suitable for battery operation.

The radiation detector preferably is configured to generate electrical signals proportionate to intensity of detected, reflected radiation. The microcontroller may be configured to detect passing of the marked portion as a function of the electrical signals. Every time the marked portion passes, one full rotation of the rotating disc is registered, indicating a certain amount of consumption of the commodity being monitored.

The microcontroller may be configured to instruct the radiation emitter to adapt an intensity of the emitted radiation as a function of the electrical signals. Thus, if the amount of received radiation is high, the intensity of emitted radiation may be reduced. Adapting the intensity as a function of electrical signals ensures that optimum intensity for proper functioning of the reader is always available.

The reader may further comprise a second a radiation detector having a second detector housing, being provided at the second surface and facing towards the edge in order to receive a second portion of the reflected radiation, from the edge, wherein the second radiation detector is located in the disc plane and wherein the emitter housing and the second detector housing overlap when projected on to the plane perpendicular to the direction of the emitted radiation.

The radiation detector may be located at one side of the emitted radiation and the second radiation detector an opposite side, across the emitted radiation.

The second radiation detector preferably is connected to the microcontroller, and preferably further is configured to generate second electrical signals proportionate to intensity of the second portion of the reflected radiation. Then, the microcontroller may further be configured to determine a direction of rotation of the rotating disc as a function of the electrical signals and the second electrical signals.

A second aspect of the present invention relates to a method of reading a utility meter through a reader, the utility meter having a rotating disc having an edge, the edge having a marked portion, the disc defining a disc plane, the method comprising steps of:
- an emitter emitting radiation in the disc plane towards the edge and
- a detector receiving a portion of reflected radiation, from the edge,
wherein the emitter and the detector overlap when projected on to a plane perpendicular to a direction of the emitted radiation.

The method may further comprise a step of adapting intensity of the emitted radiation.

The method may further comprise steps of generating electrical signals proportionate to intensity of the portion of the reflected radiation and detecting passing of the marked portion as a function of the electrical signals.

The method may further comprise a step of adapting intensity of the emitted radiation as a function of the electrical signals.

The method may further comprise a step of receiving a second portion of the reflected radiation, from the edge.

The method may further comprise steps of generating second electrical signals proportionate to intensity of the second portion of the reflected radiation and determining a direction of rotation of the rotating disc as a function of the electrical signals and the second electrical signals.

### BRIEF DESCRIPTION OF THE ACCOMPANYING DRAWINGS

So that the manner in which the above recited features of the present invention can be understood in detail, a more particular description of the invention, briefly summarized above, may have been referred by embodiments, some of which are illustrated in the appended drawings. It is to be noted, however, that the appended drawing illustrate only typical embodiments of this invention and are therefore not to be considered limiting of its scope, for the invention may admit to other equally effective embodiments.

These and other features, benefits, and advantages of the present invention will become apparent by reference to the following text figure, with like reference numbers referring to like structures across the views, wherein:
Fig. 1 illustrates an assembly of a utility meter and a reader for reading the utility meter, in accordance with an embodiment of the present invention; and
Fig. 2 illustrates a method of reading a utility meter, in accordance with an embodiment of the present invention.

### DETAILED DESCRIPTION OF THE PREFERRED EMBODIMENTS

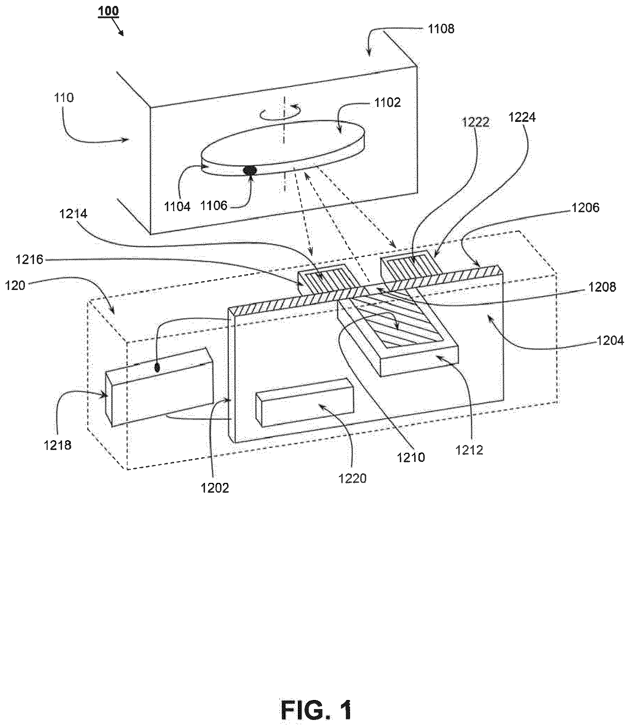

Figure 1 illustrates an assembly 100 of a utility meter 110 and a reader 120 for reading the utility meter 110. The utility meter 110 has a rotating disc 1102 having an edge 1104 having a marked portion 1106, such as a black dot or area. The marked portion 1106 has smaller radiation reflectivity compared to the rest of the edge 1104. Preferably, the rotating disc 1102 is provided in an at least partially transparent housing 1108.

The reader 120 comprises an element 1202 provided alongside the edge 1104. The element 1202 has a first surface 1204, a second surface 1206 and an edge portion 1208. The first surface 1204 is facing away from the edge 1104 and the second surface 1206 is facing towards the edge 1104. Also, the edge portion 1208 is extending from the first surface 1204 to the second surface 1206. Figure 1 illustrates only a section of the element 1202 for purpose of clarity and making certain components attached to the element 1202 visible, which would otherwise be hidden in the view. The element 1202 has been sectioned along a plane of the rotating disc 1102. Therefore, only sections of elements located in the plane of the rotating disc 1102 are visible in figure 1. The elements lying above the plane are not visible in figure 1 and the ones lying below are visible in whole. Naturally, the element 1202 need not extend on both sides of the plane.

Further, the reader 120 comprises a radiation emitter 1210 having an emitter housing 1212 and being positioned so as to emit radiation in a direction along the edge portion 1208 and towards the edge 1104. Further, the radiation emitter 1210 is located in the plane of the rotating disc 1102 in order to emit the radiation along the plane, such as in a direction at least substantially normal to the edge 1104. The radiation emitter 1210 may be any type of radiation emitter, such is a laser, a LED, an OLED, or the like. Any wavelength or wavelength region or interval may be used, such as infrared radiation or visible light.

Also, the reader 120 comprises a radiation detector 1214 having a detector housing 1216. The radiation detector 1214 is provided at the second surface 1206 and facing towards the edge 1104 in order to receive a portion of radiation reflected from the edge 1104. Further, the radiation detector 1214, such as a radiation sensitive surface thereof, is located in the plane of the rotating disc 1102. Thus, when the radiation is emitted along the plane, radiation will be reflected in that plane and part thereof will impinge on the detector.

Further, the emitter housing 1212 and the detector housing 1216 overlap when projected on to a plane perpendicular to the direction of the emitted radiation.

Therefore, the radiation emitter 1210 is positioned so as to emit the radiation just past the radiation detector 1214. The overlap makes it possible to launch the radiation toward the disc almost along the same direction as that along which the detected reflected radiation travels. It is noted that the emitter 1210 is positioned to emit the radiation in a direction at least substantially normal to the rotating disc 1102. The overlap ensures that radiation detector 1214 is close enough to the radiation emitter 1210 and hence the direction of the reflected radiation in order to receive the portion of the reflected radiation. The overlap makes it possible to have the launched and reflected radiation closer than possible if the housing of the detector and emitter abutted. It is noted that the edge 1104 is curved. Thus, there will be an angular difference between the radiation launched toward the disc and the reflected radiation. Thus, if this angle is too large, it is preferable to adapt an angle of the radiation sensitive portion of the detector to this angle. This gives multiple problems, one being simply mounting the radiation detector at an angle in relation to the element 1202, another being that the angle will depend on the distance from the detector to the disc. It is desired to provide a sensor as versatile as possible.

It is noted that the edge portion 1208, at which the radiation emitter launches the radiation, may be a channel or hole in the element 1202 through which the radiation is launched. Alternatively, the edge portion 1208 may be an outer edge of the element 1202, so that the radiation emitter housing is, in the overlap, partly extending outside of the circumference of the element 1202. If, in the plane, the element 1202 was introduced, it may have a circumference extending between the radiation detector housing and the radiation beam, or it may have an opening surrounding the radiation beam position.

The reader 120 comprises a battery 1218 configured to provide power to the reader 120. The use of battery 1218 makes the reader 120 portable and easier to carry around within a facility. The reader 120 comprises a microcontroller 1220 connected with the radiation detector 1214 and the radiation emitter 1210. The microcontroller may be used to practice various control strategies during operation of the reader. The control strategies may be directed towards saving of power, ambient noise cancellation, greater accuracy and remote control etc.

The microcontroller 1220 is further configured to instruct the radiation emitter 1210, such as to adapt an intensity of the emitted radiation. The intensity of the emitted radiation allows saving of power during various modes of operations. Further, saving of power makes the reader suitable for battery operation or in scenarios where not enough power is available, such as in remote locations of a facility. In accordance with an embodiment, the radiation detector 1214 is further configured to generate electrical signals proportionate to intensity of the portion of the reflected radiation.

Correctly positioning the sensor in relation to the utility meter may be seen in the Applicant's co-pending application filed on even date and with the title "A SENSOR AND A METHOD FOR READING A UTILITY METER". This reference is hereby incorporated by reference.

However, if there is ambient light, radiation incident on the radiation detector 1214 would have the portion of the reflected radiation and noise due to the ambient light. Therefore, filters, both in hardware around the radiation detector 1214 and in software for the microcontroller 1220 may be used for ensuring that only the portion of the reflected radiation is considered for further processing. In another embodiment, the radiation emitter 1210 is pulsed and the ambient light is received at the radiation detector 1214 outside pulses and used to cancel out the background. Another manner of handling ambient light may be seen in the Applicants co-pending application filed on even date and with the title "A METHOD AND A SYSTEM FOR OBTAINING INFORMATION FROM A UTILITY METER". This reference is hereby incorporated by reference.

Further, the microcontroller 1220 may be configured to detect passing of the marked portion 1106 as a function of the electrical signals. This is due to the fact, that the intensity of the reflected radiation from the marked portion 1106 will be comparatively less than that from the rest of the edge 1104. Hence, there will be a drop in strength of the electrical signals. The microcontroller 1220 may be configured to instruct the radiation emitter 1210 to adapt intensity of the emitted radiation as a function of, but not limited to, an intensity of the radiation received. Also, the intensity may depend on whether the marker is expected or not. Then, just after having sensed the marker, a lower intensity, lower pulse frequency or a lower pulse width may be used to save power.

The reader 120 may further comprise a second a radiation detector 1222 having a second detector housing 1224. The second radiation detector 1222 is also provided at the second surface 1206 and faces towards the edge 1104 in order to receive a second portion of the reflected radiation, from the edge 1104. Further, the second radiation detector 1222, such as a radiation sensitive portion thereof, is also located in the plane of the rotating disc 1102. The detectors are positioned on either side of the emitter. Also, the emitter housing 1212 and the second detector housing 1224 overlap when projected on to the plane perpendicular to the direction of the emitted radiation. The radiation detector 1214 has been located at one side of the direction of the emitted radiation and the second radiation detector 1222 has been located at an opposite side, across the direction of the emitted radiation.

The second radiation detector 1222 may be connected to the microcontroller 1220. Further, the second radiation detector 1222 may further be configured to generate second electrical signals proportionate to intensity of the second portion of the reflected radiation. Then, the microcontroller 1220 may be configured to determine a direction of rotation of the rotating disc 1102 as a function of the electrical signals and the second electrical signals.

For example, taking figure 1 as a reference, if there is a drop in the strength of the electrical signal from the first detector, followed by drop in the strength of the second electrical signal, within a relatively short period of time, the rotating disc 1102 is rotating in anticlockwise direction. Similarly, if there is drop in the strength of second electrical signal followed by a drop in the strength of the electrical signal from the first detector, within a relatively short period of time, the rotating disc 1102 is rotating in clockwise direction. Various embodiments of method of reading a utility meter can now be understood taking the embodiments of the above assembly 100 as reference.

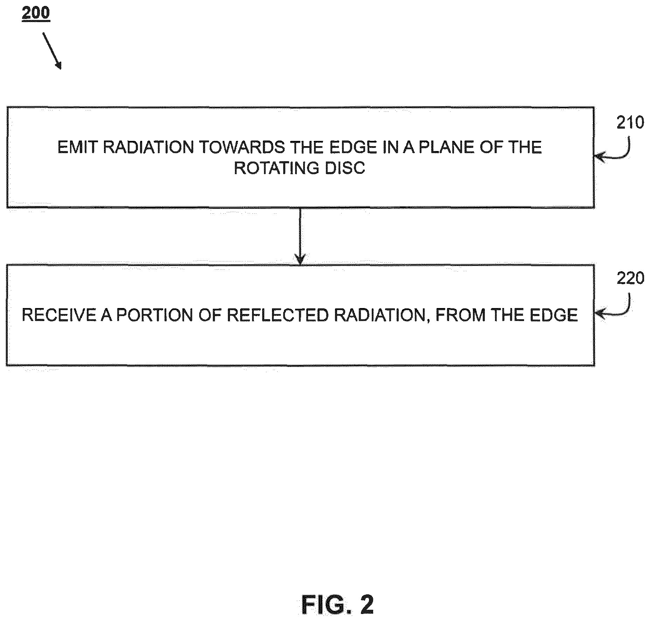

Figure 2 illustrates a method 200 for reading a utility meter. The method begins at step 210 by emitting radiation towards the edge 1104 in the plane of the rotating disc 1102. The radiation is emitted by the radiation emitter 1210. The emitted radiation falls on the edge 1104 and is at least partially reflected from the edge 1104, in form of reflected radiation. At step 220, the portion of reflected radiation, from the edge 1104, is received at the radiation detector 1214.

The electrical signals, proportionate to the intensity of the portion of the reflected radiation, are generated by the radiation detector 1214. Further, passing of the marked portion 1106 is detected by the microcontroller 1220, as a function of the electrical signals. The radiation emitter 1210 may adapt the intensity of the emitted radiation, on receiving such instructions from the microcontroller 1220.The radiation emitter 1210 may adapt the intensity of the emitted radiation as the function of the electrical signals.

The second portion of the reflected radiation may be received at the second radiation detector 1222, from the edge 1104. Further, the second electrical signals, proportionate to intensity of the second portion of the reflected radiation, may be generated by the second radiation detector 1222. Also, the direction of rotation of the rotating disc 1102 is determined by the microcontroller 1220, as a function of the electrical signals and the second electrical signals.

The present invention allows a number of advantages. First, the use of laser as the radiation emitter allows the invention to be used in situations where the housing of the rotating disc is only partially transparent. Also, locating the radiation emitter and radiation detector in the plane of the disc and such that the projections of the respective housings overlap, ensures that the emitted and reflected radiation are at least substantially normal to the edge and the radiation detector, respectively. At least substantially normal directions make the reader range independent. Additional radiation detectors allow determination of direction of rotation of the rotating disc. Also, adapting the intensity of emitted radiation allows saving of power, making the invention suitable for battery operation.

Various modifications to these embodiments are apparent to those skilled in the art from the description and the accompanying drawings. The principles associated with the various embodiments described herein may be applied to other embodiments. Therefore, the description is not intended to be limited to the embodiments shown along with the accompanying drawings but is to be providing broadest scope of consistent with the principles and the novel and inventive features disclosed or suggested herein. Accordingly, the invention is anticipated to hold on to all other such alternatives, modifications, and variations that fall within the scope of the present invention and appended claim.

## Claims

1. An assembly (100) of a utility meter (110) and a reader (120) for reading the utility meter (110), the utility meter (110) having a rotating disc (1102), having an edge (1104), the edge (1104) having a marked portion (1106), the disc defining a disc plane, the reader (120) comprising:
an element (1202) having a first surface (1204), a second surface (1206) and an edge portion (1208), the first surface (1204) facing away from the edge (1104), the second surface (1206) facing towards the edge (1104), the edge portion (1208) extending from the first surface (1204) to the second surface (1206);
a radiation emitter (1210) having an emitter housing (1212) and being positioned so as to emit radiation in a direction along the edge portion (1208), in the disc plane and towards the edge (1104), wherein the radiation emitter (1210) is located in the disc plane, and
a radiation detector (1214) having a detector housing (1216), being provided at the second surface (1206) and facing towards the edge (1104) in order to receive a portion of reflected radiation, from the edge (1104), wherein the radiation detector (1214) is located in the disc plane,
wherein the emitter housing (1212) and the detector housing (1216) overlap when projected on to a plane perpendicular to the direction of the emitted radiation.

2. The assembly (100) as claimed in claim 1, wherein the reader further comprises a microcontroller (1220) connected with the radiation detector (1214) and the radiation emitter (1210).

3. The assembly (100) as claimed in claim 2, wherein the microcontroller (1220) is configured to instruct the radiation emitter (1210).

4. The assembly (100) as claimed in claim 2 or 3, wherein the microcontroller (1220) is further configured to instruct the radiation emitter (1210) to adapt intensity of the emitted radiation.

5. The assembly as claimed in any of claims 2-4, wherein:
the radiation detector is further configured to generate electrical signals proportionate to an intensity of detected, reflected radiation; and
the microcontroller is configured to detect passing of the marked portion as a function of the electrical signals.

6. The assembly as claimed in any of claims 2-5, wherein the microcontroller is further configured to control the radiation emitter to adapt an intensity of the emitted radiation as a function of the electrical signals.

7. The assembly as claimed in any of the preceding claims, wherein the reader further comprises a second a radiation detector having a second detector housing, being provided at the second surface and facing towards the edge in order to receive a second portion of the reflected radiation, from the edge;
wherein the second radiation detector is located in the disc plane; and
wherein the emitter housing and the second detector housing overlap when projected on to the plane perpendicular to the direction of the emitted radiation.

8. The assembly as claimed in claim 7, wherein the radiation detector is located at one side of the direction of the emitted radiation and the second radiation detector is located at an opposite side, across the direction of the emitted radiation.

9. The assembly as claimed in claim 7 and 2, wherein:
the second radiation detector is connected to the microcontroller;
the second radiation detector is further configured to generate second electrical signals proportionate to an intensity of detected, reflected radiation; and
the microcontroller is further configured to determine a direction of rotation of the rotating disc as a function of the electrical signals and the second electrical signals.

10. A method of reading a utility meter through a reader, the utility meter having a rotating disc having an edge, the edge having a marked portion, the disc defining a disc plane, the method comprising steps of:
an emitter emitting radiation in the disc plane towards the edge; and
a detector receiving a portion of reflected radiation, from the edge,
wherein the emitter and the detector overlap when projected on to a plane perpendicular to a direction of the emitted radiation.

11. The method as claimed in claim 10, further comprising a step of adapting an intensity of the emitted radiation.

12. The method as claimed in claim 10 or 11, further comprising steps of:
generating electrical signals proportionate to an intensity detected, reflected radiation; and
detecting passing of the marked portion as a function of the electrical signals.

13. The method as claimed in any of claims 10-12, further comprising a step of adapting an intensity of the emitted radiation as a function of the electrical signals.

14. The method as claimed in any of claims 10-13, further comprising a step of receiving a second portion of the reflected radiation, from the edge.

15. The method as claimed in any of claims 10-14, further comprising steps of:
generating second electrical signals proportionate to an intensity of the second portion of the reflected radiation; and
determining a direction of rotation of the rotating disc (1102) as a function of the electrical signals and the second electrical signals.
